# EUROPEAN PATENT APPLICATION

(11) **EP 0 543 038 A1**
(43) Date of publication of application: **26.05.1993**
(21) Application number: 91119775.4
(22) Date of filing: 19.11.1991
(51) Int. Cl.: H04N 9/82, H04N 7/08, H04N 9/84

(54) **Color-under chroma channel encoded with auxiliary signals**

(71) Applicant: SAMSUNG ELECTRONICS CO., LTD., Suwon-City, Kyounggi-Do 441-370 (KR)
(72) Inventor: Strolle, Christopher H., Glenside, Pennsylvania 19038 (US); Wedam, Werner F., Lawrenceville, New Jersey 08648 (US); Ko, Jung-Wan, Suwon-city, Kyounggi-do (KR); Patel, Chandrakant B., Hopewell, NJ 08525-9601 (KR)
(74) Representative: Grünecker, Kinkeldey, Stockmair & Schwanhäusser Anwaltssozietät

(57) **Abstract**

Apparatus and a method is disclosed for encoding, transmitting and decoding of one or two auxiliary or control signals on a phase alternating carrier. The phase alternating carrier is generated such that, in a given frame, it is in-phase on one scan line, and out-of-phase on the next scan line relative to the conventional chroma carrier. The (I and Q) chroma information is modulated on the chroma carrier in a conventional form to generate a chroma signal. The phase alternating carrier is modulated with one or two auxiliary signals in a similar fashion. The encoded phase alternating carrier is then added to the modulated chroma carrier (chroma signal), and processed in the chroma channel for recording on a magnetic tape. A decoder or playback apparatus processes the chroma channel to decode the two modulated carriers. The modulated chroma carrier (chroma signal) is decoded in a conventional demodulator to recover the chroma (I and Q) information. The encoded phase alternating carrier is decoded to recover the original auxiliary signals. The auxiliary signals may be digital audio signals or motion signals indicative of motion in the scenes.

## Description

### BACKGROUND OF THE INVENTION

This invention relates generally to apparatus and a method for processing video signals comprising chroma and luma signals. More particularly, this invention relates to video signals as processed in a video tape recorder in which a separate channel is used for recording a chroma on a magnetic tape.

In video recording systems, it is known to modulate the chroma signals conventionally appearing in the upper portions of the spectrum of a composite television signal to a position in the spectrum below the luma signals. Such a modulation or down-conversion system is known in the recording art as a color-under recording system. In such a color-under system, the in-phase(I) and quadrature(Q) components of the chroma information are processed in a conventional manner to develop the color signals(C) for viewing a scene.

There is a need in the color video cassette recording art to provide additional channels for conveying auxiliary signals useful to the color television signals such as digital audio information and/or signals relating to the motion that occurs in the video scene.

The present invention utilizes in its preferred form the color-under chroma channel to carry additional information such as digital audio signals and/or signals manifesting motion that occurs in a viewed scene.

### SUMMARY OF THE INVENTION

A phase alternating carrier (PAC) is generated from a conventional 3.58 MHz (=455fₕ/2) chroma carrier by line-to-line multiplexing of this carrier and its 180° phase shifted version. Thus the phase alternating carrier is 180° out of phase with respect to the phase of the chroma carrier on alternate lines; i.e., out of phase on odd lines, and in-phase on the even lines.

The PAC is modulated with a first auxiliary signal, and a 90° phase shifted PAC is modulated with a second auxiliary signal. These two modulated PACs are added to provide a signal, called herein, a phase alternating signal (PAS). The PAS is then added to the conventional modulate chroma carrier, called herein, the chroma signal (C). The sum of the two signals is called herein, a "augmented chroma signal." In a VHS system, augmented chroma signal is down-modulated as color-under signal at a frequency of 629 KHz (=40fₕ). The augmented chroma signal along with processed luminance signal information are passed to a recording medium, or other transmission medium for utilization on a real time basis or stored on a tape or other storage medium for use at a subsequent time as desired.

The augmented chroma signal is decoded (played back) essentially by reversing the encoding process by a network of adders and line delays whereby the chroma signal (C) and the phase alternating signal (PAS) are separated to provide the original chroma and the auxiliary signals at respectively separated outputs for utilization by the playback apparatus as desired.

### IN THE DRAWING:

Figure 1 is a block diagram of a color under system embodying the present invention;
Figure 2 is a block diagram showing the system for decoding or playing back the color under augmented chroma signal;
Figure 3 is a schematic showing the chroma vector resolved from the respective I and Q signals and relative positions of the auxiliary signals;
Figure 4 is one embodiment of auxiliary signal demodulators for two auxiliary signals; and
Figure 5 is another embodiment of an auxiliary signal demodulator for only one auxiliary signal.

### DETAILED DESCRIPTION

The present description is made in the context of a television signal processing system in accordance with the NTSC standards adopted by the United States. Nevertheless, the principles of the invention may be applied to the PAL system used primarily in Europe. Moreover, the invention can have application to color television transmission or recording systems where the chroma signal is not interleaved with the luminance signal in accordance with a standard NTSC color television system.

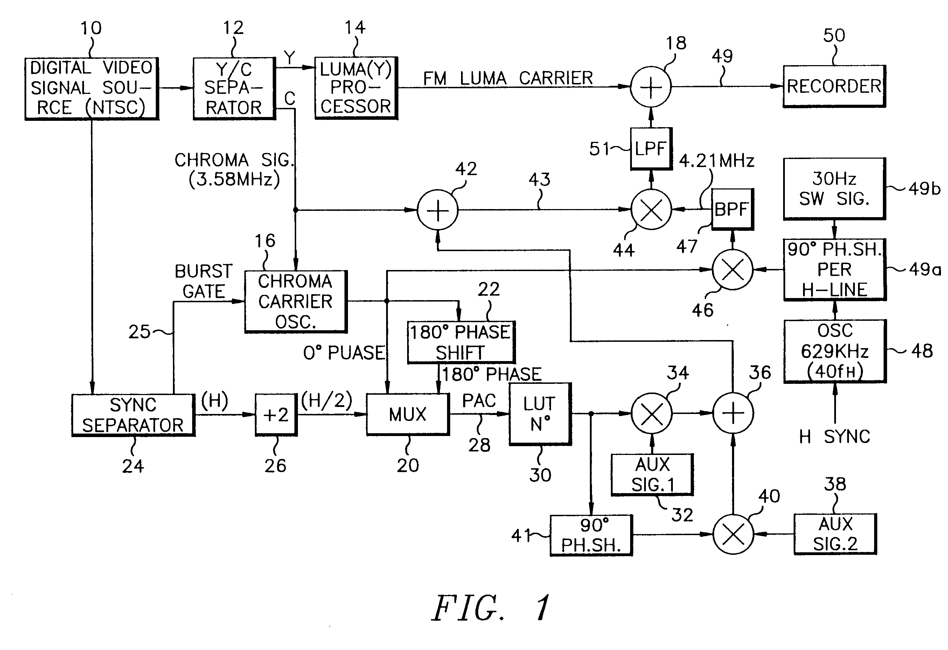

Reference is made to Figure 1 for a block diagram illustrating the preferred embodiment of the invention. A source 10 of video signals in digital format is coupled to a luma/chroma (Y/C) separator 12 providing the luma signal (Y) to a luma processor 14 and the chroma signal (C) to a 3.58 MHz chroma carrier oscillator 16. The Y/C separator is preferrably of the type employing one-H combing of the chroma signal. The luma processor 14 of conventional form used in the video recording art provides an FM modulated luma which is coupled to an adder 18.

The chroma signal (C) is coupled to the oscillator 16, and to an adder 42. The chroma carrier oscillator 16 is responsive to a burst gate from sync separator 24 on path 25. The chroma carrier oscillator 16 generates a 3.58 MHz continuous wave (cw) carrier which is frequency and phase locked to an incoming burst signal gated by the burst gate on path 25. The oscillator 16, thereby provides a chromaburst-locked 3.58 MHz cw at 0° phase to a multiplexer (MUX) 20 and to a 180° degree phase shifter 22.

The video source 10 is also coupled to the sync separator 24 which generates a horizontal sync signal (H) and the burst gate on path 25. The horizontal sync signal H is applied to a divide-by-2 circuit 26, which thus provides the horizontal signal H/2 for controlling the MUX 20. The MUX 20 responding respectively to the chroma carrier at 0° and 180° provides a phase alternating carrier (PAC), at output 28. A suitable phase (N°) of the PAC is selectable relative to the phase of the oscillator 16 output by a look-up table (LUT) 30.

In the preferred embodiment the angle of the MUX output is 57° advanced or 33° delayed relative to the referenced 3.58 MHz chroma carrier, principally because this implementation of the system is relatively less costly. However, for certain applications it may be desirable to provide a different phase. Moreover, the function of providing the horizontal line selection for the phase of the PAC may be embodied in a programmable read-only memory (PROM). A PROM will provide the PAC that is precise and noise-free.

An auxiliary signal, AUX1, preferrably low-pass one-H combed, from source 32 is modulated on one phase of the PAC, at the LUT 30 output by a modulator 34 which is coupled to one input of an adder 36. A second auxiliary signal, AUX2, preferrably also low-pass one-H combed, if desired, may be modulated in quadrature with signal AUX1 by a 90° phase-shifted PAC from the phase shifter 41 coupled to output of the LUT 30. The signal AUX1 can be a suitably encoded digital audio signal derived from the monaural or stereo TV audio system, not shown.

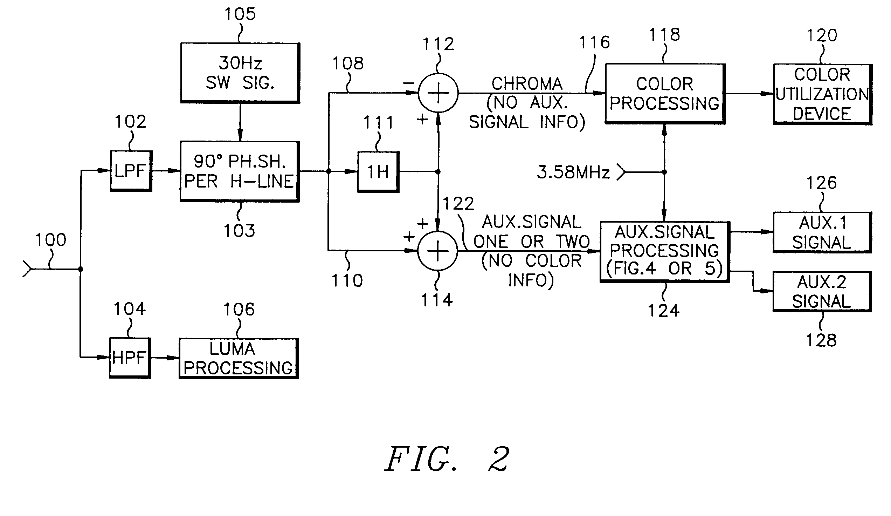

Moreover, the second auxiliary signal may be a control signal useful in operating the play-back system. Such a signal may be a motion signal indicative of motion occurring the video scene. Suitable techniques known in the art may be used to derive either of the auxiliary signals. Other control signals may be used to be encoded on the phase alternating carrier (PAC) as will be apparent to those skilled in this art. Preferred forms of decoders for the auxiliary signals will be described with Figures 2, 4, and 5.

The respective modulated phase alternating carriers (PACs) carrying auxiliary signals AUX1 and AUX2 are added at adder 36 the output of which is coupled to an input of adder 42. The second input of adder 42 is coupled to the the chroma signal (C) derived from the separator 12. The output of adder 42 is the augmented chroma signal comprised of the chroma signal encoded with chroma information, and the combined phase alternating carrier(s) encoded with one (or two) auxiliary signal(s). The invention can have application to color television transmission systems where the chroma signal is not interleaved with the luminance signal in accordance with a standard NTSC color television system.

However, the preferred form of the invention is used in video recording systems in which the transmission path is a magnetic tape. The magnetic tapes used in the industry presently are bandwidth limited and accordingly dictate that the chroma carrier be placed in the so-called color under format whereby the signal, equivalent to the output of adder 42 is remodulated in modulator 44 to the spectrum below the luma channel. Typically, the color under carrier is at 629 KHz (=40fₕ ) in the VHS system.

The means to generate the signals in color under format will now be described. The output from adder 42 consisting of the chroma signal (C), and the PAS signal from adder 36 are coupled on path 43 to a first input of modulator 44. The second input to the modulator 44 is a 4.21 MHz carrier signal which is the output of the band-pass-filter, BPF 47 coupled to the output of the modulator 46. The BPF filter 47 passes only the 4.21 MHz sideband to the modulator 44. The modulator 46 has two inputs; a 0° phase cw chroma carrier from oscillator 16, and a 629 KHz (=40fₕ) carrier coupled to the output of the 90°-phase shifter/H-line 49a. The 629 KHz carrier is frequency and phase locked to the input video signal since the phase shifter is coupled to the 629 KHz oscillator 48 which is under control of the horizontal sync H derived from the video, and a 30 Hz switching signal derived in the recorder to identify the two recorded tracks on the magnetic tape. The modulation products of modulator 44 has the chroma signal and the auxiliary signal(s) modulated on the 3.58 MHz carriers ± 4.21 MHz carrier. The low-pass filter 51 passes only 629 KHz sidebands. The 629 KHz carriers are known as the color under carriers. The modulated 629 KHz signal is the color under signal used in this invention. The color under signal and the fm luminance signal are passed through the adder 18 for recording on the magnetic tape. The input to the recorder thus consists of the fm luminance signal, and the two color under carriers modulated respectively with the chroma, and the auxiliary signal(s).

It will be appreciated by those skilled in this art that the processing of the phase alternating carrier to be modulated with one or two auxiliary signals is analogous to the modulation of a chroma carrier in 0°, and 90° with I and Q chroma components respectively to generate the chroma signal. Thus the modulated auxiliary signals of the present invention are in quadrature analogous to the I and Q signals of the conventional chroma signal.

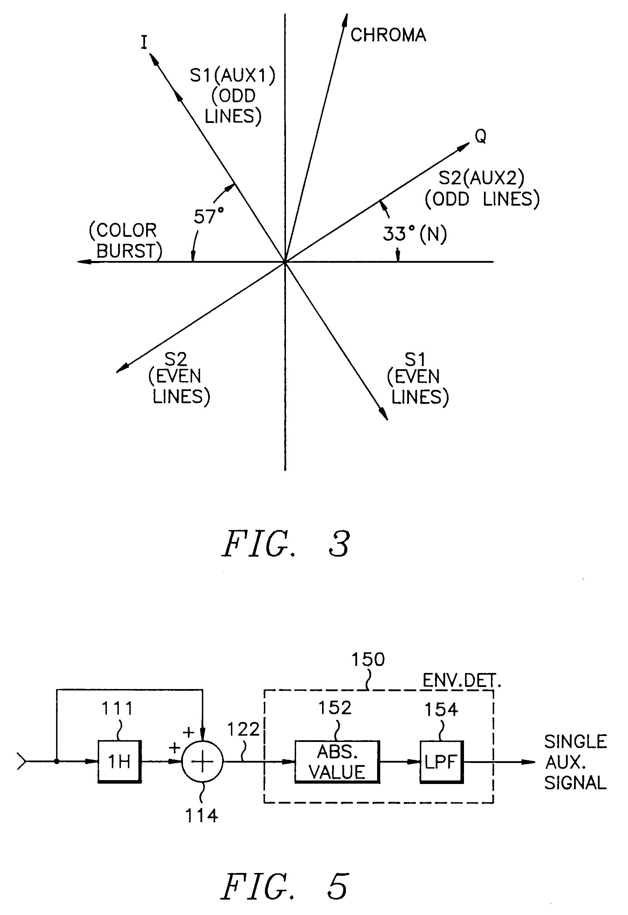

The operation of the system of Fig. 1 will be further explained in conjunction with the vector diagram of Figure 3. A study of the vector diagram of the two carriers, chroma and PAC, shown in Fig. 3 and Tables I and II presented below show the phase increments of each of the carriers through two frames and several lines of operation. In conventional operation, according to the specifications of the NTSC the 3.58 MHz carrier is phase alternating by 180° on each successive line being scanned. At the start of the first and second field on lines 1 and 263 respectively of video frame one, the phase of the chroma carrier is at 0°. At the start of the first and second field of frame two, however, the phase of the chroma carrier is at -180°. The phase of the PAC, moreover, it should be understood, is at 0° at the start of each field of frames 1 and 2. These phase values are shown in Table I.

**Table I**

| Phase of the 3.58 MHz Chroma Carrier & Phase Alternating Carrier (PAC) | | | | |
|---|---|---|---|---|
| | | Start of | Chroma Carrier | Phase Alt Carrier |
| FRI | FLD1 | line 1 | 0° | 0° |
| | FLD2 | line 263 | 0° | 0° |
| FR2 | FLD1 | line 1 | -180° | 0° |
| | FLD2 | line 263 | -180° | 0° |

The relative position of the I and Q vectors and the vectors of the auxiliary signals 1 and 2 are shown in Fig 3. In this embodiment, the value of N for the angle of the phase of the signals AUX1, and AUX2 shown as S1 and S2 in Figure 3 are the same as the phase angle of the I and Q signals. As mentioned above, N can be any desired value. The diagram would be more complex to illustrate the other possible values of N, and is not considered necessary for an understanding of the operation of the system, as will be apparent to those skilled in this art.

It is seen that the position of the I and Q vectors remain constant relative to the chroma burst vector which nevertheless it should be understood is alternating line to line. However because the PACs carrying the auxiliary signals AUX1 and AUX2 is varying relative to the chroma carrier, the auxiliary signals are in phase with the I and Q signal on odd lines, and out of phase on even lines, as shown in Figure 3.

An analysis of the phase progression of the color under chroma carrier at 629 KHz depends on an understanding of the VHS standards where the phase angle of 629 KHz carrier is retarded by 90° per H-line for field 1, and then reversing the process, the phase angle is advanced by 90° per H-line for field 2. Refer to Table II for a tabulation and details of these phase changes.

As indicated in Table II, the PAC color under carrier is in phase with the chroma color under carrier on odd lines, and 180° out of phase on the even lines for the frame# 1. This is due to the constrained alternation of the PAC carrier phase as described above. Table II indicates that on any two given adjacent lines in a frame, the two 629 KHz carriers are always out of phase on one line, and in-phase on the other line. The relative position of the I and Q vectors and the auxiliary signal vectors S1 and S2 remains the same for the color under mode as shown in Figure 3. It should be understood that the table II refers to the carriers without modulation.

**Table II**

| 629 KHz Color Under Carriers: CHROMA & PAC [ IP: In-phase; OP: Out of phase] | | | | | | | | |
|---|---|---|---|---|---|---|---|---|
| | | | 3.58MHz Chroma | 629 KHz Chroma | | 629 KHz PAC | 3.58 MHz PAC | VHS Color Under Carrier |
| FR1 | FLD1 | line 1 | 0° | 0° | IP | 0° | 0° | 0° |
| | | line 2 | 180° | -90° | OP | 90° | 0° | 90° |
| | | line 3 | 0° | 180° | IP | 180° | 0° | 180° |
| | | line 4 | 180° | 90° | OP | -90° | 0° | 270° |
| | | | (-180°) | | | | | (-90°) |
| | FLD2 | line 263 | 0° | 0° | IP | 0° | 0° | 0° |
| | | line 264 | 180° | 90° | OP | -90° | 0° | -90° |
| | | line 265 | 0° | 180° | IP | -180° | 0° | -180° |
| | | line 266 | 180° | -90° | OP | +90° | 0° | -270° |
| | | | | | | | | (+90°) |
| FR2 | FLD1 | line 1 | 180° | 180° | OP | 0° | 0° | 0° |
| | | line 2 | 0° | 90° | IP | 90° | 0° | 90° |
| | | line 3 | 180° | 0° | OP | 180° | 0° | 180° |
| | | line 4 | 0° | -90° | IP | -90° | 0° | 270° |
| | | | | | | | | (-90°) |
| | FLD2 | line 263 | 180° | 180° | OP | 0° | 0° | 0° |
| | | line 264 | 0° | -90° | IP | -90° | 0° | -90° |
| | | line 265 | 180° | 0° | OP | -180° | 0° | -180° |
| | | line 266 | 0° | +90° | IP | 90° | 0° | -270° |
| | | | | | | | | (+90°) |

Thus, reference is made to Figure 2 for a preferred form of playback decoder. Figure 2 shows a block diagram of the decoder or playback system utilizing the present invention. The fm luminance, and the 629 KHz carriers modulated with the chroma and the auxiliary signal(s) are applied on path 100 which is coupled to a low pass filter 102 and a high pass filter 104, respectively. The high pass filter 104 passes the fm luma signal into a known luma processing circuit 106.

The low pass filter 102 passes the LPF output to a 90° phase shifter 103. The shifter 103, similar to phase shifter 49a of the encoder of Figure 1, provides a 90° phase shift on a line by line basis. A 30 Hz switching signal controls this 90° phase being advanced or delayed based on the field 1, or field 2. The phase shifter 103 passes the 629 KHz signal on paths 108 and 110 to one input of an adder 114 and to the - input of the adder 112, respectively. The output of 103 is also passed through a 1H delay 111, the output of which is coupled with a second input, respectively, of the adders 112 and 114.

Accordingly, the chroma signal with auxiliary signal information removed by adder 112 is passed on line 116 to a suitable color processing demodulator 118 which provides the base-band I and Q color components to color utilization device 120. A suitable color demodulator 118 is described in a co-pending patent application (Docket: AML 1014) entitled "Apparatus for Restoring the Correct Phase Relation of the Chroma and Luminance Signals Passed through Separate Paths", based on the inventions of J.W. Ko, and C. B. Patel and filed on even date herewith and assigned to the common assignee.

The 629 KHz carriers modulated only by auxiliary signals, AUX1, and AUX2 are recovered as the output of adder 114, and are coupled to an auxiliary signal processor 124. The processor 124 demodulates the PAC encoded with the auxiliary signals and provides them at separate outputs 126 and 128 for use as desired.

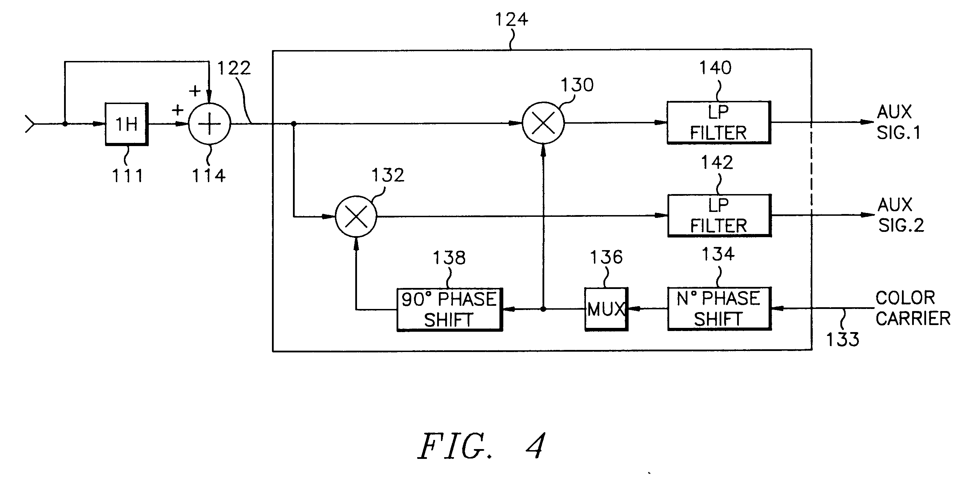

A preferred processor 124 is shown in Figure 4. The augmented chroma signal is coupled to the One-H delay line 111, and to the one input of the adder 114. The one-H delayed signal is applied to the other input of the adder 114. The output of the adder 114 is the PAS conducted on path 122 to one respective input of modulators 130 and 132. A color oscillator 16 output on path 133 is applied to a N° phase shifter 134 and then to Multiplexer 136. MUX 136, in a similar manner as MUX 20 of the encoder of Fig. 1, provides a line separator directly to modulator 130 or, via a 90° phase shifter 138, to modulator 132. Modulators 130 and 132 demodulate the encoded carriers to extract the respective auxiliary signals, AUX1, and AUX2 after being passed through the LP filter 140 and 142. The auxiliary signal demodulator or processor shown in Figure 4 is useful for demodulating two auxiliary signals, and can be used even if only one auxiliary signal is to be demodulated. However, for systems in which only one auxiliary signal is to be demodulated, a simplified and more efficient circuit may be used, a shown in Figure 5.

Figure 5 responding to the augmented chroma signal with PAS with only one auxiliary signal is passed through the 1H delay 111, and the adder 114. The output is coupled to an envelop detector 150 comprised of an absolute value detector 152, such as a PROM, and then to a low pass filter 154. The output is the auxiliary signal provided at either source 32 or 38 of Figure 1.

While the invention has been described using a 3.58 MHz chroma carrier and subsequently modulated to the color under carrier of 629 KHz, the invention can be embodied with the base band chroma directly modulating a 629 KHz carrier.

Moreover, for systems such as PAL, and Beta tape format, and similar systems where the chroma carrier is encoded with different phase relationships than as described above for the VHS format, the present invention would be embodied in such systems with the encoded alternating carrier in phase alternation relative to the chroma carrier.

The embodiment of the invention described herein first alternates the carrier which is subsequently encoded with one or two auxiliary signals. It will be apparent to those skilled in this art that the process can be reversed. Thus, the carrier may be first encoded with the desired auxiliary signals and subsequently the carrier can be phase alternated. Otherwise the process described above will be followed.

Futhermore, while the invention has been described for applications in the particular embodiments illustrated, other applications will be readily apparent to those skilled in this art limited only by the appended claims.

## Claims

1. Method for generating a video signal comprising at least one additional signal **characterized by**
modulating the additional signal is modulated with a phase alternating carrier having the same frequency as the carrier of the chrominance signal and having a phase which is relative to the chrominance carrier 180^{o} out of phase during the time of each second scan line, and in-phase during the time of the other scan lines.
modulating the additional signal with the phase alternating carrier and,
adding the modulated phase alternating carrier with the chrominance signal to obtain a modified chrominance signal.

2. Method according to claim 1, **characterized by**
modulating a second additional signal on the phase alternating carrier by use of guadrature modulation.

3. Method according to claim 1 or 2 **characterized by**,
shifting the phase of the phase alternating carrier by a given angle before modulating it with the additional signal.

4. Method according to at least one of the claims 1-3 **characterized by**
generating the phase alternating carrier by reading out data from a PROM.

5. Method according to at least one of the preceding claims **characterized by**
separating the video signal into chrominance- and luminance signal,
processing the luminance signal,
modulating the modified chrominance signal with an additional carrier in order to transform the modified chrominance signal into a frequency band below the frequency band of the luminance signal,
adding the modified chrominance signal transformed into the lower frequency band to the processed luminance signal.

6. Method according to at least one of the preceding claims **characterized in that**
the additional signal being a digital audio signal.

7. Method according to claim 6, **characterized in that**
the digital audio signal comprises a frequency multiplexed signal of at least two audio signals.

8. A method according to at least one of the preceding claims, **characterized in that**
the additional signal being a signal indicative of motion of a video signal.

9. Apparatus for generating a video signal comprising at least one additional signal comprising:
a source for a video signal,
a source for an additional signal,
means for generating a phase alternating carrier having the same frequency as the carrier of the chrominance signal and having a phase which is 180^{o} out of phase during the time of each second scan line relative to the phase of the chrominance carrier and in phase during the time of the other scan lines,
first modulation means for modulating the additional signal on the phase alternating carrier,
addition means for adding the modulated phase alternating carrier with the chrominance signal to obtain a modified chrominance signal.

10. Apparatus according to claim 9 **characterized by** second modulating means for generating in response to said chrominance and said phase alternating carrier a colour under chroma carrier with line to line and frame to frame phase inversion of 180^{o} relative to said chrominance carrier, whereby said colour under phase alternating carrier is 180^{o} out of phase relative to said colour under chroma carrier.

11. Apparatus according to claim 9 or 10 **characterized in that** said phase alternating carrier is at 0^{o} phase angle relative to the phase of said colour under carrier.

12. Apparatus according to at least one of the claims 9-11 **characterized in that** said phase alternating carrier is 180^{o} out of phase relative to said colour under chroma carrier.

13. Apparatus according to claim at least one of the claims 9-13, **characterized by** a source for a second additional signal,
third modulation means for modulating the first and the second additional signal on the phase alternating carrier using quadrature modulation.

14. Apparatus according to claim at least one of the claims 9-13 **characterized by** means for shifting the phase of the phase alternating carrier.

15. Apparatus according to at leat one of the claims 9-14 **characterized by**
a PROM for storing data used for the generation of the phase alternating carrier.

16. Apparatus according to at least one of the claims 9-15 **characterized by**
separating means for separating the video signal into the luminance and the chrominace signal, means for processing the luminance signal and additional modulation means for transforming the modified chrominance signal into a frequency band below the frequency band of the luminance signal.

17. Apparatus according to at least one of the claims 9-16 a further addition means for adding the modified chrominance signal to the luminance signal.

18. Apparatus according to claim 16 or 17 **characterized by**
means for shifting the phase of the modified chrominance signal by +90^{o} for each scan line of the first field and by -90^{o} for each scan line of the second field of each frame.

19. Apparatus according to at least one of the claims 9-18 **characterized in that**
the additional signal is a digital audio signal.

20. Apparatus according to claim 19,
the digital audio signal comprises the frequency multiplexed signal of at least two audio signals.

21. Apparatus according to at least one of the claims 9-20, **characterized in that**
the additional signal is a signal indicative of motion in said video signal.

22. A method for demodulating the additional signal and the chrominance signal from a modified chrominance signal generated according to the method of claim 1 **characterized by**
forming the sum and the difference between the actual modified chrominance signal and the modified chrominance signal delayed by one scan line, providing the two resulting signals on two different outputs, and,
using one of the output signals as the chrominance signal and the other output signal as the additional signal.

23. Method according to claim 22 **characterized in that**
in case that the modified chrominance signal comprises two auxiliary signals, demodulating the respective output signal with quadrature demodulation to obtain the two additional signals.

24. Apparatus for demodulating the modified chrominance signal generated according to the method of claim 1 for recovering the chrominance and the additional signal, **characterized by**
means for delaying the modified chrominance signal for the time of one scan line,
addition means for adding the delayed signal to the undelayed modified chrominance signal,
substraction means for forming the difference between the delayed and the undelayed modified chrominance signal,
whereby, the two resultant signals are provided at two different outputs.

25. Apparatus according to claim 24 **characterized by**
quadrature demodulation means for demodulation of two quadrature modulated additional signals.
